# EUROPEAN PATENT APPLICATION

(11) **EP 2 610 990 A2**
(43) Date of publication of application: **03.07.2013**
(21) Application number: 12157189.7
(22) Date of filing: 27.02.2012
(51) Int. Cl.: H02J 5/00, H02J 7/00, H02J 7/02, H01F 38/14

(54) **Wireless power transmission device**

(30) Priority: 02.01.2012 TW 101100043
(71) Applicant: Primax Electronics Ltd, Taipei (TW)
(72) Inventor: Chen, Chih-Hung, Taiwan ROC Taipei (TW)
(74) Representative: Rees, Simon John Lewis

(57) **Abstract**

A wireless power transmission device (4) includes a main body (40), a first position-limiting bulge (43), a second position-limiting bulge (44), and a closed transmitter coil (45). The first and second position-limiting bulge are disposed within the main body. A space is defined between the first and second position-limiting bulge. The closed transmitter coil is penetrated through the space. The two sides of the coil are respectively in contact with the first and second position-limiting bulge, so that the coil is shaped as a dumbbell. Since the coil is shaped as a dumbbell, the magnetic flux can be uniformly generated by the electromagnetic effect when the coil is magnetized. The wireless charging efficiency is enhanced.

## Description

### FIELD OF THE INVENTION

The present invention relates to a power transmission device, and more particularly to a wireless power transmission device by utilizing a wireless charging technology.

### BACKGROUND OF THE INVENTION

With increasing development of science and technology, a variety of electronic devices are development toward small size, light weightiness and easy portability in order to comply with the users' requirements. Consequently, various portable electronic devices are produced by the manufacturers of the electronic devices. The common portable electronic devices include for example mobile phones, personal digital assistants (PDAs), handheld game consoles (e.g. PSP, NDSL and Gameboy series game consoles), and the like.

Due to the portability of the portable electronic device, the portable electronic device fails to be connected with the power source at any time. For providing sufficient electric power to the portable electronic device, a built-in battery is usually installed in the portable electronic device. The battery is a chargeable battery. Once a power socket for a power source is available, the portable electronic device may be plugged into the power socket, so that the chargeable battery of the portable electronic device is charged by the power source.

For example, in a case that the residual battery capacity of the portable electronic device is insufficient, the chargeable battery of the portable electronic device may be charged by a charger. As known, the conventional charger has a connecting wire. After the connecting wire is plugged into the portable electronic device and the conventional charger is connected with the power source, electric power may be transmitted from the charger to the portable electronic device through the connecting wire. However, the applications of the charger are usually restricted by the connecting wire. For example, during the process of charging the portable electronic device, the connecting wire usually becomes hindrance from operating the charger.

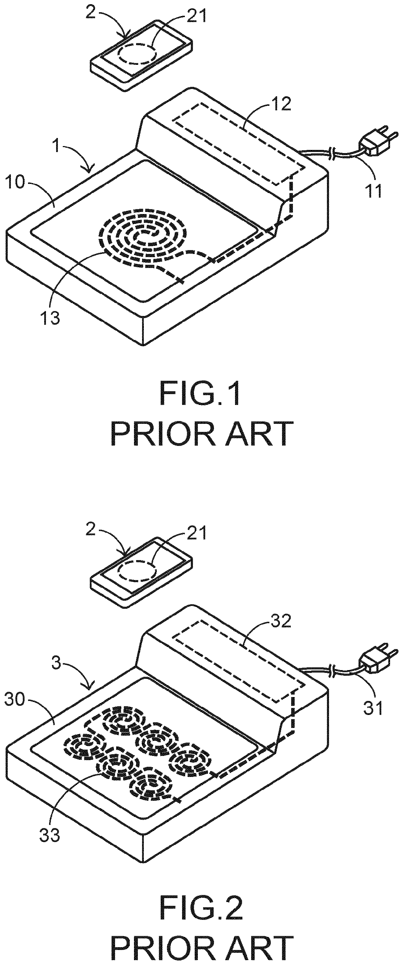

For solving the drawbacks encountered from the wired charging technology, with development of a wireless charging technology, a wireless power transmission device for wirelessly charging the portable electronic device has been disclosed. FIG. 1 schematically illustrates the relationship between a conventional wireless power transmission device and a conventional portable electronic device. As shown in FIG. 1, the conventional wireless power transmission device 1 comprises a main body 10, a power cable 11, a power module 12, and a transmitter coil 13. In addition, the conventional portable electronic device 2 comprises a casing 20, a closed receiver coil 21, and a chargeable battery (not shown).

The power cable 11 of the conventional wireless power transmission device 1 is exposed outside the main body 10 to be connected with a power source (not shown). The power module 12 and the transmitter coil 13 are both disposed within the main body 12. In addition, the power module 12 is connected with the power cable 11 and the transmitter coil 13. When the power module 12 is driven by the power source, the power module 12 generates an electric current. When the electric current flows through the transmitter coil 13, an electromagnetic effect occurs. In response to the magnetic flux generated by the electromagnetic effect, the transmitter coil 13 outputs a corresponding electric power. On the other hand, the closed receiver coil 21 is disposed within the casing 20 of the conventional portable electronic device 2 for receiving the electric power from the transmitter coil 13. The chargeable battery is connected with the closed receiver coil 21 for storing the electric power which is received by the closed receiver coil 21.

Generally, the main body 10 of the conventional wireless power transmission device 1 is designed to have a platform profile. In addition, the volume of the main body 10 of the conventional wireless power transmission device 1 is larger than the casing 20 of the conventional portable electronic device 2 in order to facilitate the user to place the conventional portable electronic device 2 thereon. During the process of transmitting the electric power from the conventional wireless power transmission device 1 to the conventional portable electronic device 2, the closed receiver coil 21 within the conventional portable electronic device 2 should be purposely placed at a position near the transmitter coil 13 of the conventional wireless power transmission device 1. That is, for allowing the closed receiver coil 21 to receive the electric power, the transmitter coil 13 should be aligned with the closed receiver coil 21 as precisely as possible.

For allowing the closed receiver coil to be placed at the position near the transmitter coil, another conventional wireless power transmission device has been disclosed. FIG. 2 schematically illustrates the relationship between another conventional wireless power transmission device and a conventional portable electronic device. As shown in FIG. 2, the conventional wireless power transmission device 3 comprises a main body 30, a power cable 31, a power module 32, and a plurality of transmitter coils 33. Except that a plurality of transmitter coils 33 are included in the conventional wireless power transmission device 3, the structures and functions of other components of the conventional wireless power transmission device 3 are similar to those of the conventional wireless power transmission device 1, and are not redundantly described herein. In addition, these transmitter coils 33 are spread over the inner portion of the conventional wireless power transmission device 3. Consequently, once the conventional portable electronic device 2 is placed on the main body 30 of the conventional wireless power transmission device 3, the closed receiver coil 21 within the conventional portable electronic device 2 may be wirelessly charged by the plurality of transmitter coils 33 within the main body 30.

However, since the distance between every two adjacent transmitter coils 33 is not always identical, some drawbacks may occur. That is, if the distance between two adjacent transmitter coils 33 is relatively smaller, the electromagnetic effect is stronger. On the other hand, if the distance between two adjacent transmitter coils 33 is relatively larger, the electromagnetic effect is weaker. In response to the non-uniform electromagnetic effect, the wireless charging efficiency is deteriorated.

Therefore, there is a need of providing a wireless power transmission device with enhanced wireless charging efficiency.

### SLTMMARY OF THE INVENTION

The present invention provides a wireless power transmission device with enhanced wireless charging efficiency.

In accordance with an aspect of the present invention, there is provided a wireless power transmission device for transmitting an electric power to a closed receiver coil of a portable electronic device. The wireless power transmission device includes a main body, a first position-limiting bulge, a second position-limiting bulge, and a closed transmitter coil. The first position-limiting bulge is disposed within the main body. The second position-limiting bulge is disposed within the main body, and located beside the first position-limiting bulge. A space is defined between the first position-limiting bulge and the second position-limiting bulge. The closed transmitter coil is disposed within the main body for transmitting the electric power to the closed receiver coil, thereby charging the portable electronic device. The closed transmitter coil is penetrated through the space between the first position-limiting bulge and the second position-limiting bulge. In addition, two sides of the closed transmitter coil are respectively in contact with the first position-limiting bulge and the second position-limiting bulge.

In an embodiment, the closed transmitter coil includes a first long segment, a second long segment, a first short segment, and a second short segment. The first long segment is located at a first side of the closed transmitter coil. The first long segment is penetrated through the space between the first position-limiting bulge and the second position-limiting bulge, and the first long segment is contacted with the first position-limiting bulge, so that the first long segment is bent. The second long segment is located at a second side of the closed transmitter coil. The second long segment is penetrated through the space between the first position-limiting bulge and the second position-limiting bulge, and the second long segment is contacted with the second position-limiting bulge, so that the second long segment is bent. The first short segment is located at a first side of the space, wherein two ends of the first short segment are respectively connected with the first long segment and the second long segment. The second short segment is located at a second side of the space, wherein two ends of the second short segment are respectively connected with the first long segment and the second long segment.

In an embodiment, the first long segment is bent in a direction distant from the first position-limiting bulge, the second long segment is bent in a direction distant from the second position-limiting bulge, the first short segment is bent in a direction distant from the space, and the second short segment is bent in a direction distant from the space and symmetrical to the second short segment, wherein the closed transmitter coil is shaped as a dumbbell.

In an embodiment, the first position-limiting bulge has a first convex structure, and the first convex structure is located beside the space to be contacted with the first long segment, so that the first long segment is bent in a direction distant from the first position-limiting bulge. The second position-limiting bulge has a second convex structure, and the second convex structure is located beside the space to be contacted with the second long segment, so that the second long segment is bent in a direction distant from the second position-limiting bulge.

In an embodiment, a bending degree of the first long segment is determined according to a curvature of the first convex structure, and a bending degree of the second long segment is determined according to a curvature of the second convex structure.

In an embodiment, the first position-limiting bulge and the second position-limiting bulge are symmetrically disposed within the main body, and the first position-limiting bulge and the second position-limiting bulge are both made of iron oxide.

In an embodiment, the wireless power transmission device includes a power cable and a power module. The power cable is connected with a power source, and exposed outside the main body. The power module is connected with the power cable and the closed transmitter coil. When the power module is driven by the power source, the power module generates an electric current. The electric current flows through the closed transmitter coil, so that an electromagnetic effect occurs, wherein in response to the electromagnetic effect, the closed transmitter coil outputs the electric power.

In an embodiment, the portable electronic device further includes a casing and a chargeable battery. The closed receiver coil is covered by the casing. When the casing is located near the main body or contacted with the main body, the electric power from the closed transmitter coil is received by the closed receiver coil within the casing. The chargeable battery is disposed within the casing and connected with the closed receiver coil. The electric power received by the closed receiver coil is stored in the chargeable battery.

In an embodiment, the portable electronic device further includes a casing, a protective cover, and a chargeable battery. The casing is covered by the protective cover. The closed receiver coil is disposed within the protective cover. When the protective cover is located near the main body or contacted with the main body, the electric power from the closed transmitter coil is received by the closed receiver coil within the protective cover. The chargeable battery is disposed within the casing and connected with the closed receiver coil through the protective cover. The electric power received by the closed receiver coil is stored in the chargeable battery.

In an embodiment, the main body further includes a receiving recess for accommodating the portable electronic device. The receiving recess is disposed in a top surface of the main body, and a size of the receiving recess matches a size of a casing or a protective cover of the portable electronic device. The closed transmitter coil is aligned with the receiving recess and disposed under the receiving recess.

In an embodiment, a size of the main body matches a size of a casing or a protective cover of the portable electronic device.

The above objects and advantages of the present invention will become more readily apparent to those ordinarily skilled in the art after reviewing the following detailed description and accompanying drawings, in which:

### BRIEF DESCRIPTION OF THE DRAWINGS

FIG. 1 schematically illustrates the relationship between a conventional wireless power transmission device and a conventional portable electronic device;

FIG. 2 schematically illustrates the relationship between another conventional wireless power transmission device and a conventional portable electronic device;

FIG. 3 schematically illustrates the relationship between a wireless power transmission device and a portable electronic device according to a first embodiment of the present invention;

FIG. 4 is a schematic functional block diagram illustrating the relationship between the wireless power transmission device and the portable electronic device according to the first embodiment of the present invention;

FIG. 5 is a schematic top and cross-sectional view illustrating the casing of the wireless power transmission device for a portable electronic device according to the first embodiment of the present invention; and

FIG. 6 schematically illustrates the relationship between a wireless power transmission device and a portable electronic device according to a second embodiment of the present invention.

### DETAILED DESCRIPTION OF THE PREFERRED EMBODIMENT

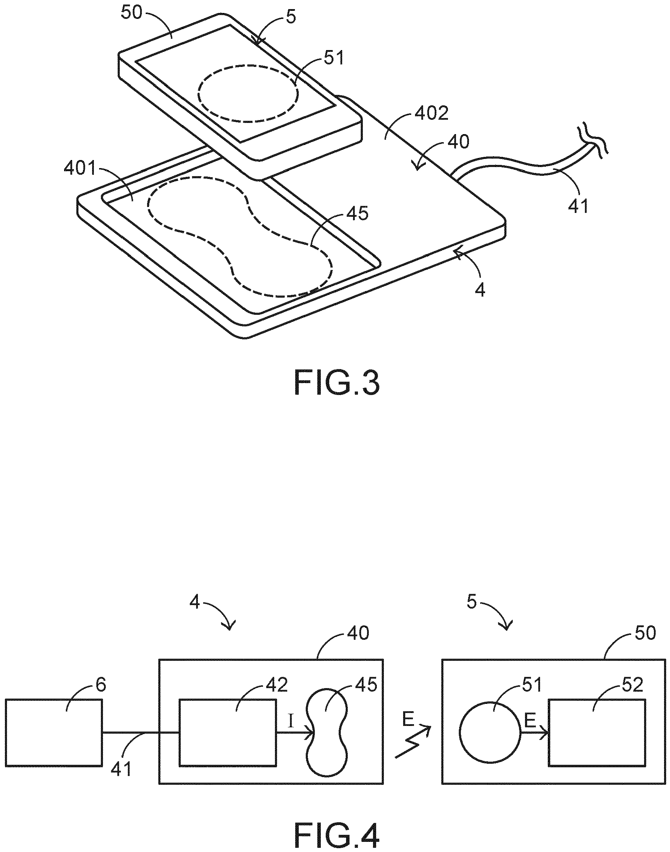

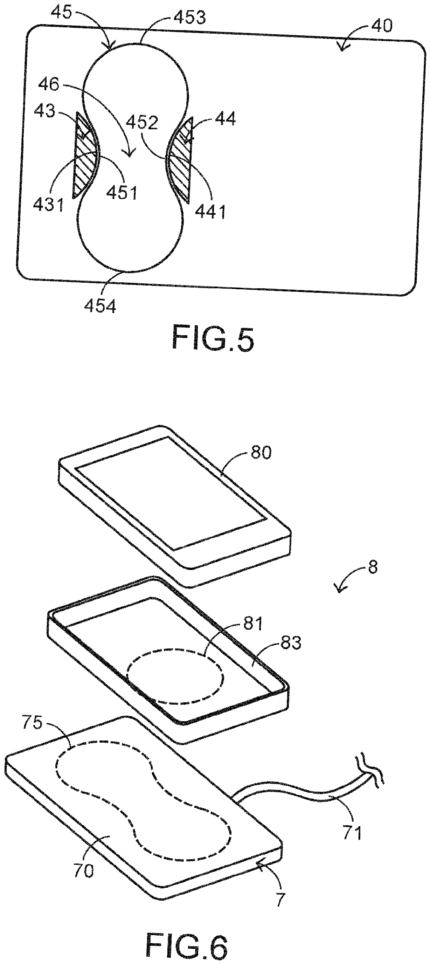

For eliminating the drawbacks encountered from the prior art, the present invention provides a wireless power transmission device. FIG. 3 schematically illustrates the relationship between a wireless power transmission device and a portable electronic device according to a first embodiment of the present invention. FIG. 4 is a schematic functional block diagram illustrating the relationship between the wireless power transmission device and the portable electronic device according to the first embodiment of the present invention. Please refer to FIGS. 3 and 4. The wireless power transmission device 4 comprises a main body 40, a power cable 41, a power module 42, a first position-limiting bulge 43 (see FIG. 5), a second position-limiting bulge 44 (see FIG. 5), and a closed transmitter coil 45. The portable electronic device 5 comprises a casing 50, a closed receiver coil 51, and a chargeable battery 52. The power cable 41 of the wireless power transmission device 4 is exposed outside the main body 40 to be connected with a power source 6. The main body 40 has a receiving recess 401. The receiving recess 401 is concavely disposed in a top surface 402 of the main body 40 for accommodating the portable electronic device 5. In this embodiment, the main body 40 of the wireless power transmission device 4 has a platform profile. In addition, the closed transmitter coil 45 is shaped as a dumbbell. An example of the portable electronic device 5 includes but is not limited to a mobile phone. In addition, the closed receiver coil 51 is wound to have a circular shape.

Please refer to FIG. 4 again. The power module 42 and the closed transmitter coil 45 are both disposed within the main body 40. The power module 42 is connected with the power cable 41 and the closed transmitter coil 45. When the power module 42 is driven by the power source 6, the power module 42 generates an electric current I. When the electric current I flows through the closed transmitter coil 45, an electromagnetic effect occurs. In response to the magnetic flux generated by the electromagnetic effect, the closed transmitter coil 45 outputs a corresponding electric power E. On the other hand, the closed receiver coil 51 is disposed within the casing 50 of the conventional portable electronic device 5. Once the casing 50 is located near the main body 40 of the wireless power transmission device 4 or contacted with the main body 40, the electric power E from the closed transmitter coil 45 is received by the closed receiver coil 51. The chargeable battery 52 is disposed within the casing 50 and connected with the closed receiver coil 51 for storing the electric power E which is received by the closed receiver coil 51.

As shown in FIG. 3, the size of the receiving recess 401 of the main body 40 matches the size of the casing 50 of the portable electronic device 5. Under this circumstance, since the closed receiver coil 51 of the portable electronic device 5 is aligned with the closed transmitter coil 45 of the wireless power transmission device 4, the wireless charging efficiency is enhanced.

Hereinafter, the configurations of the closed transmitter coil 45 will be illustrated with reference to FIG. 5. FIG. 5 is a schematic top and cross-sectional view illustrating the casing of the wireless power transmission device for a portable electronic device according to the first embodiment of the present invention. The first position-limiting bulge 43 is disposed within the main body 40. The second position-limiting bulge 44 is disposed within the main body 40, and located beside the first position-limiting bulge 43. The first position-limiting bulge 43 and the second position-limiting bulge 44 are symmetrical to each other, and disposed within the main body 40. There is a space 46 between the first position-limiting bulge 43 and the second position-limiting bulge 44. The closed transmitter coil 45 is also disposed within the main body 40. In addition, the closed transmitter coil 45 is penetrated through the space 46 between the first position-limiting bulge 43 and the second position-limiting bulge 44. The both sides of the closed transmitter coil 45 are in contact with the first position-limiting bulge 43 and the second position-limiting bulge 44, respectively. For clarification and brevity, as shown in FIG. 5, the both sides of the closed transmitter coil 45 are not respectively in contact with the first position-limiting bulge 43 and the second position-limiting bulge 44 in order to clearly indicate the closed transmitter coil 45, the first position-limiting bulge 43 and the second position-limiting bulge 44. In this embodiment, the first position-limiting bulge 43 and the second position-limiting bulge 44 are both made of iron oxide.

In particular, the closed transmitter coil 45 comprises a first long segment 451, a second long segment 452, a first short segment 453, and a second short segment 454. The first long segment 451 is located at a first side of the closed transmitter coil 45. The first long segment 451 is penetrated through the space 46 between the first position-limiting bulge 43 and the second position-limiting bulge 44. Since the first long segment 451 is contacted with the first position-limiting bulge 43, the first long segment 451 is bent in a direction distant from the first position-limiting bulge 43 (i.e. in the rightward direction as shown in FIG. 5). The second long segment 452 is located at a second side of the closed transmitter coil 45. The second long segment 452 is penetrated through the space 46 between the first position-limiting bulge 43 and the second position-limiting bulge 44. Since the second long segment 452 is contacted with the second position-limiting bulge 44, the second long segment 452 is bent in a direction distant from the second position-limiting bulge 44 (i.e. in the leftward direction as shown in FIG. 5). The first short segment 453 is located at a first side of the space 46 (i.e. in the upward direction as shown in FIG. 5). In addition, the both ends of the first short segment 453 are connected with the first long segment 451 and the second long segment 452, respectively. The second short segment 454 is located at a second side of the space 46 (i.e. in the downward direction as shown in FIG. 5). In addition, the both ends of the second short segment 454 are connected with the first long segment 451 and the second long segment 452, respectively. That is, the way of winding the closed transmitter coil 45 is to shape the closed transmitter coil 45 as a dumbbell.

Please refer to FIG. 5 again. The first position-limiting bulge 43 has a first convex structure 431. The first convex structure 431 is located beside the space 46 to be contacted with the first long segment 451, so that the first long segment 451 is bent in a direction distant from the first position-limiting bulge 43. Similarly, the second position-limiting bulge 44 has a second convex structure 441. The second convex structure 441 is located beside the space 46 to be contacted with the second long segment 452, so that the second long segment 452 is bent in a direction distant from the second position-limiting bulge 44. The bending degree of the first long segment 451 is determined according to the curvature of the first convex structure 431. The bending degree of the second long segment 452 is determined according to the curvature of the second convex structure 441. Since the first position-limiting bulge 43 and the second position-limiting bulge 44 are symmetrical to each other, the first long segment 451 and the second long segment 452 are symmetrically bent.

When the electric current I flows through the closed transmitter coil 45, an electromagnetic effect occurs. Since the closed transmitter coil 45 is shaped as a dumbbell, the magnetic flux can be uniformly generated by the electromagnetic effect. Correspondingly, the dumbbell-shaped closed transmitter coil 45 outputs an electric power E to the closed receiver coil 51 in order to perform the wireless charging operation. In accordance with a key feature of the present invention, the closed transmitter coil 45 is shaped as a dumbbell according to an electromagnetic theory and undue experiments. It was demonstrated that the dumbbell-shaped closed transmitter coil 45 is effective to increase the wireless charging efficiency.

The present invention further provides a second embodiment. FIG. 6 schematically illustrates the relationship between a wireless power transmission device and a portable electronic device according to a second embodiment of the present invention. As shown in FIG. 6, the wireless power transmission device 7 comprises a main body 70, a power cable 71, a power module (not shown), a first position-limiting bulge (not shown), a second position-limiting bulge (not shown), and a closed transmitter coil 75. The portable electronic device 8 comprises a casing 80, a closed receiver coil 81, a chargeable battery (not shown), and a protective cover 83. Except for the following two items, the configurations of other components of the wireless power transmission device 7 and the portable electronic device 8 are substantially similar to those of the first embodiment, and are not redundantly described herein.

Firstly, in comparison with the first embodiment, the receiving recess is exempted from the main body 70 of the wireless power transmission device 7. The size of the main body 70 matches the size of the protective cover 83 of the portable electronic device 8. Under this circumstance, since the closed receiver coil 81 of the portable electronic device 8 is aligned with the closed transmitter coil 75 of the wireless power transmission device 7, the wireless charging efficiency is enhanced. Secondly, the closed receiver coil 81 of the portable electronic device 8 is not disposed within the casing 80, but the closed receiver coil 81 is disposed within the protective cover 83. The protective cover 83 is used for covering the casing 80, thereby protecting the casing 80. Moreover, the closed receiver coil 81 within the protective cover 8 is connected with a chargeable battery, which is disposed within the casing 80. In addition, the protective cover 83 is in communication with the casing 80 through a mini universal series bus (Mini USB), so that the protective cover 83 is electrically connected with the casing 80.

It is noted that numerous modifications and alterations may be made while retaining the teachings of the invention. For example, in the second embodiment, the main body 70 may also have the receiving recess. Moreover, in the first embodiment, the closed receiver coil may be disposed within the protective cover.

From the above two embodiments, the wireless power transmission device of the present invention has two position-limiting bulges to confine the closed transmitter coil, so that the closed transmitter coil is shaped as a dumbbell. Since the closed transmitter coil is shaped as a dumbbell, the magnetic flux can be uniformly generated by the electromagnetic effect when the closed transmitter coil is magnetized. Under this circumstance, the wireless charging efficiency is enhanced. Moreover, the size of the main body of the wireless power transmission device matches the size of the casing or the protective cover of the portable electronic device. Alternatively, a receiving recess matching the size of the casing or the protective cover of the portable electronic device is formed in the top surface of the main body of the wireless power transmission device. Consequently, it is easy to stack or superimpose the closed receiver coil of the portable electronic device with the closed transmitter coil of the wireless power transmission device. Under this circumstance, since the electric power from the closed transmitter coil is easily received by the closed receiver coil, the wireless charging efficiency is enhanced.

While the invention has been described in terms of what is presently considered to be the most practical and preferred embodiments, it is to be understood that the invention needs not be limited to the disclosed embodiment. On the contrary, it is intended to cover various modifications and similar arrangements included within the spirit and scope of the appended claims which are to be accorded with the broadest interpretation so as to encompass all such modifications and similar structures.

## Claims

1. A wireless power transmission device for transmitting an electric power to a closed receiver coil of a portable electronic device, said wireless power transmission device comprising:
a main body;
a first position-limiting bulge disposed within said main body;
a second position-limiting bulge disposed within said main body, and located beside said first position-limiting bulge, wherein a space is defined between said first position-limiting bulge and said second position-limiting bulge; and
a closed transmitter coil disposed within said main body for transmitting said electric power to said closed receiver coil, thereby charging said portable electronic device, wherein said closed transmitter coil is penetrated through said space between said first position-limiting bulge and said second position-limiting bulge, and two sides of said closed transmitter coil are respectively in contact with said first position-limiting bulge and said second position-limiting bulge.

2. The wireless power transmission device according to claim 1, wherein said closed transmitter coil comprises:
a first long segment located at a first side of said closed transmitter coil, wherein said first long segment is penetrated through said space between said first position-limiting bulge and said second position-limiting bulge, and said first long segment is contacted with the first position-limiting bulge, so that said first long segment is bent;
a second long segment located at a second side of said closed transmitter coil, wherein said second long segment is penetrated through said space between said first position-limiting bulge and said second position-limiting bulge, and said second long segment is contacted with the second position-limiting bulge, so that said second long segment is bent;
a first short segment located at a first side of said space, wherein two ends of said first short segment are respectively connected with said first long segment and said second long segment; and
a second short segment located at a second side of said space, wherein two ends of said second short segment are respectively connected with said first long segment and said second long segment.

3. The wireless power transmission device according to claim 2, wherein said first long segment is bent in a direction distant from said first position-limiting bulge, said second long segment is bent in a direction distant from said second position-limiting bulge, said first short segment is bent in a direction distant from said space, and said second short segment is bent in a direction distant from said space and symmetrical to said second short segment, wherein said closed transmitter coil is shaped as a dumbbell.

4. The wireless power transmission device according to claim 2, wherein said first position-limiting bulge has a first convex structure, and said first convex structure is located beside said space to be contacted with said first long segment, so that said first long segment is bent in a direction distant from said first position-limiting bulge, wherein said second position-limiting bulge has a second convex structure, and said second convex structure is located beside said space to be contacted with said second long segment, so that said second long segment is bent in a direction distant from said second position-limiting bulge.

5. The wireless power transmission device according to claim 4, wherein a bending degree of said first long segment is determined according to a curvature of said first convex structure, and a bending degree of said second long segment is determined according to a curvature of said second convex structure.

6. The wireless power transmission device according to claim 1, wherein said first position-limiting bulge and said second position-limiting bulge are symmetrically disposed within said main body, and said first position-limiting bulge and said second position-limiting bulge are both made of iron oxide.

7. The wireless power transmission device according to claim 1, further comprising:
a power cable connected with a power source, and exposed outside said main body; and
a power module connected with said power cable and said closed transmitter coil, wherein when said power module is driven by said power source, said power module generates an electric current, wherein said electric current flows through the closed transmitter coil, so that an electromagnetic effect occurs, wherein in response to said electromagnetic effect, said closed transmitter coil outputs said electric power.

8. The wireless power transmission device according to claim 1, wherein said portable electronic device further comprises:
a casing for covering said closed receiver coil, wherein when said casing is located near said main body or contacted with said main body, said electric power from said closed transmitter coil is received by said closed receiver coil within said casing; and
a chargeable battery disposed within said casing and connected with said closed receiver coil, wherein said electric power received by said closed receiver coil is stored in said chargeable battery.

9. The wireless power transmission device according to claim 1, wherein said portable electronic device further comprises:
a casing;
a protective cover for covering said casing, wherein said closed receiver coil is disposed within said protective cover, wherein when said protective cover is located near said main body or contacted with said main body, said electric power from said closed transmitter coil is received by said closed receiver coil within said protective cover; and
a chargeable battery disposed within said casing and connected with said closed receiver coil through said protective cover, wherein said electric power received by said closed receiver coil is stored in said chargeable battery.

10. The wireless power transmission device according to claim 1, wherein said main body further comprises a receiving recess for accommodating said portable electronic device, wherein said receiving recess is disposed in a top surface of said main body, and a size of said receiving recess matches a size of a casing or a protective cover of said portable electronic device, wherein said closed transmitter coil is aligned with said receiving recess and disposed under said receiving recess.

11. The wireless power transmission device according to claim 1, wherein a size of said main body matches a size of a casing or a protective cover of said portable electronic device.
